# EUROPEAN PATENT APPLICATION

(11) **EP 2 716 363 A1**
(43) Date of publication of application: **09.04.2014**
(21) Application number: 12306211.9
(22) Date of filing: 04.10.2012
(51) Int. Cl.: B01J 35/02, B01J 19/30

(54) **Optimized catalyst shape for steam methane reforming processes**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Camy-Perret, Frederic, 75007 PARIS (FR); Mathey, Fabrice, 78470 ST REMY LES CHEVREUSE (FR)
(74) Representative: Conan, Philippe Claude

(57) **Abstract**

A shaped catalytic composition having:
- Either a regular polyhedral form selected from octahedron, dodecahedron icosahedra, said regular polyhedral form having a symmetrical regular polygonal cross section (S) with a diagonal (Dₛ), said regular polyhedral form having a height along the longitudinal revolution axis (Hₚ), which the ratio (Dₛ)/(Hₚ), is greater than 1 and less or equal to 4 and said diagonal (Dₛ) is greater or equal to 0.5cm and less or equal to 10cm;
- Or a revolution biconical form having a symmetrical circular cross section (C) with a diameter (D_{c}) and a height along the longitudinal revolution axis (H_{c}), which the ratio (D_{c})/(H_{c}) is greater than 1 and less or equal to 4 and said diameter (D_{c}) is greater or equal to 0.5cm and less or equal to 10cm; its use, as a catalyst for gas phase chemical reactions, liquid phase chemical reactions or gas liquid phases chemical reactions.

## Description

The invention relates to novel shaped catalysts for heterogeneous catalyzed reactions, which are intended to be filled in tubular reactors, and more particularly in tubular reactors, which are exchanging heat with the surrounding atmosphere, either to cool down exothermic reactions or to bring heat to endothermic ones, as for example in steam hydrocarbon reforming.

Steam hydrocarbons reformers usually comprise several tubular reactors placed in a furnace, said reactors being filled with catalysts and fed with the process gas mixture of hydrocarbons and steam.

Typical reactions involved in the steam reforming of hydrocarbons are endothermic with a high typical time scale and they are thus requiring additional heat input and catalysts. In such reactions, heat must be efficiently transferred to the core of the reactor and reactants must be efficiently driven towards the catalyst surface.

It is also desirable to increase the specific surface of the catalyst material to improve the reaction efficiency.

It is well known that the mixing efficiency of a random packed bed increases with the feed gas velocity and/or with the size of the particles. For the same mass flow, the pressure drop induced by larger pellets is also reduced as compared to smaller ones. However the catalytic reaction efficiency decreases with the decrease of the specific surface and the increase of particle size. The choice of an adequate pellet sizes is thus a compromise between on one hand, the specific surface and the reaction efficiency, and on the other hand the heat transfer improvement and the pressure drop reductions.

Structured packing is considered as more efficient to reduce pressure drop, to increase the heat and the mass transfers and thus to improve the catalyst reaction efficiency. US patent N° 7,320,778 B2 discloses a structured catalyst support with the objective of enhancing the heat transfer from the wall to the tube centre.

However the disadvantage of the structured packing as compared to random packed bed is the gap between the packing structure and tube walls that may exist, in particular because of the expansion of the tube at high temperature. US patent publication n° US2010/0040190 and n°US2010/0038593 report efforts to solve the thermal expansion mismatch with a near wall heat transfer which is assisted with aerodynamic flows like impinging jets. Moreover, structured catalysts in large size tubular reactors are difficult to operate for example, as far as the tube filling is concerned. On the contrary, the advantage and drawbacks of traditional technology using random packing are well known. The manufacturing process for the catalyst pellets is also well described.

Several improved catalyst shapes have been disclosed for catalyst particles to improve both the specific surface of a random packing and heat transfer, while keeping or even decreasing the pressure drop.

International publication WO 2004/014549 discloses shaped catalyst in the form of a cylinder with several shaped holes of non-circular cross section to optimize the effective surface area. The diameter to height ratio ranges between 0.5 to 1.

International publications WO 2010/029323 and WO 2010/029325 disclose a shaped catalyst in the form of a cylinder with domed ends to enhance radial mixing in the core of the bed, while providing a greater effective geometric surface and a reduced pressure drop. The diameter to the total height ratio is in the range 0.5 to 2.

However, no information is disclosed on the improvement of the packing state of the random catalyst bed near the wall of the tube addressing the near wall heat transfer efficiency.

It is known that, because of the tube walls, the porosity across the tubular reactor is not constant. Depending on the ratio of the SMR tube diameter to the catalyst dimension, this effect, known as the wall effect (or channelling effect), can have a strong contribution to the wall heat transfer efficiency. This ratio can be as high as 4 to 5, for a traditional SMR tubular reactor filled with traditional holes pellets.

The porosity increases near the wall up to 1, over a distance scaling with the particle catalyst size. The wall heat transfer depends on this distance, on the rate at which this porosity increases, and on the mixing efficiency of the catalyst unit.

This effect could be controlled by specific catalyst shape, which can pack with a preferential orientation near the walls to improve the near wall heat transfer, while maintaining or reducing the pressure drop and maintaining or increasing the specific surface.

That is why the inventors developed a specific catalyst shape to improve the near wall heat transfer and to specifically address this channelling effect.

The present invention thus aims at improving the overall heat transfer inside the tubular catalyst reactors, while maintaining or improving the specific surface of the catalyst particle and maintaining or reducing the pressure drop in the packed bed by means of optimized catalyst shapes.

According to a first embodiment, the invention relates to a shaped catalytic composition having:
- Either a regular polyhedral form selected from octahedron, dodecahedron icosahedra, said regular polyhedral form having a symmetrical regular polygonal cross section (S) with a diagonal (Dₛ), said regular polyhedral form having a height along the longitudinal revolution axis (Hp), which the ratio (Dₛ)/(Hₚ), is greater than 1 and less or equal to 4 and said diagonal (Dₛ) is greater or equal to 0.5cm and less or equal to 10cm;
- Or a biconical form having a symmetrical circular cross section (C) with a diameter (D_{c}) and a height along the longitudinal revolution axis (H_{c}), which the ratio (D_{c})/(H_{c}) is greater than 1 and less or equal to 4 and said diameter (D_{c}) is greater or equal to 0.5cm and less or equal to 10cm.

According to a particular embodiment, the shaped catalytic composition as hereinbefore defined, has a central longitudinal cylindrical duct along said longitudinal revolution axis, said cylindrical duct having a circular cross-section (C') with a diameter (D_{C'}), which the ratio (D_{C'})/(D_{c}) or the ratio (D_{C'})/(Dₛ) is greater or equal to 1/50 and less or equal to 1/5.

According to a more particular embodiment, the shaped catalytic composition as hereinbefore defined, is characterized either by a ratio (Dₛ)/(Hₚ) greater than 1 and less or equal to 3, or by a ratio (D_{c})/(H_{c}) greater than 1 and less or equal to 3.

According to this aspect, the ratio (Dₛ)/(Hₚ) or the ratio (D_{c})/(H_{c}) is more particularly equal to 2.

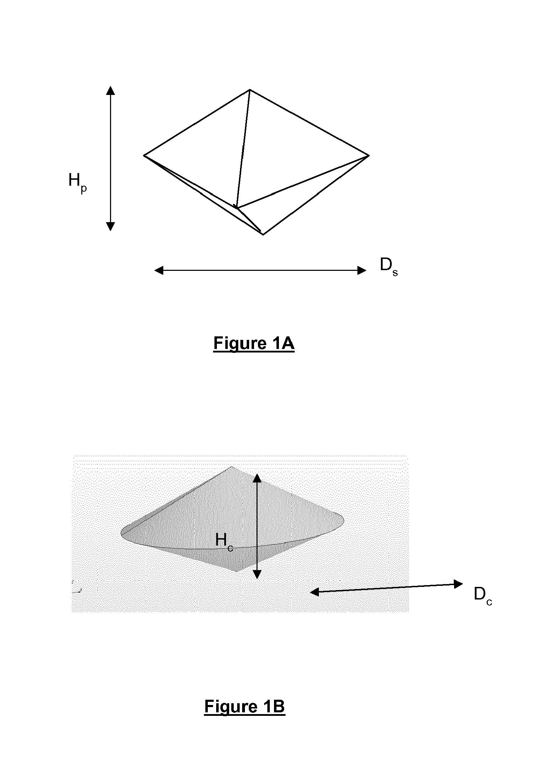

According to another particular embodiment, the shaped catalytic composition as hereinbefore defined has either a regular octahedral form or a biconical form. Figure 1A and 1B illustrate the shapes according to this particular embodiment.

According to another particular embodiment, the shaped catalytic composition as hereinbefore defined, is characterized either by, said diagonal (Dₛ) greater or equal to 0.5cm and less or equal to 5cm, or by said diameter (D_{c}) greater or equal to 0.5cm and less or equal to 5cm.

The shape of the catalyst as hereinbefore defined, allows to maintain (or increase) the equivalent specific surface s* area and allows to maintain (or decrease) pressure drop of prior art catalyst pellets, while increasing the overall heat transfer of the packed bed and in particular the wall heat transfer.

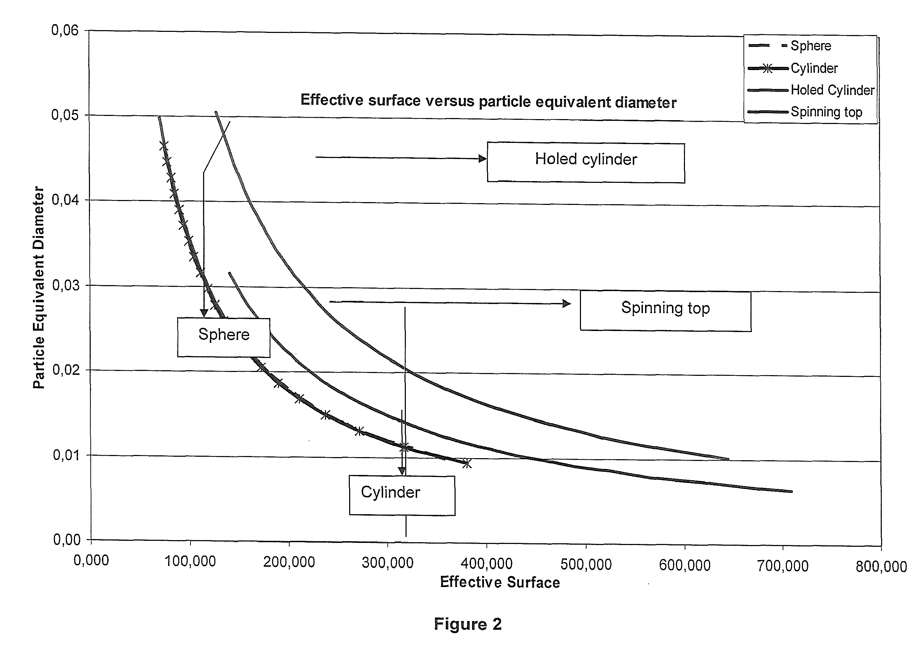

Figure 2 is diagrammatic representation of the evolution of the equivalent particle diameter Dp (defined as the diameter, a sphere of same volume would have) for several particles shapes with the specific surface s* (defined as the available surface per m³ in the packed bed). It is shown that for instance for having and equivalent specific surface area of the prior art catalyst (cylinder catalyst with 9 holes, Dp = 1.8cm), the appropriate equivalent diameter of a biconical new particle should be preferably around 1.2cm.

The shaped catalytic composition according the invention is obtained by known methods.

One of these methods may comprise:
- A step a) of preparation of a shaped support; by shaping a support composition to the desired geometry by tableting and/or moulding, said support composition, to obtain either a shaped support with an appropriate high-surface area, or a shaped support;
- Optionally a step b) of calcination of said shaped support obtained from step a), to reach a shaped support with an appropriate high-surface area;
- A step c) of application of a catalytic active phase on said shaped support with an appropriate high-surface area obtained either from step a) or from step b), to obtain either a shaped support coated with the appropriate active phase, with an appropriate high-surface area, which consists in the shaped catalytic composition as hereinbefore defined, or a shaped support coated with the appropriate active phase;
- and optionally a step d) of calcination of said shaped support coated with the appropriate active phase obtained from step c), to obtain with an appropriate
high-surface area, which consists in the shaped catalytic composition as hereinbefore defined.

Another method of may comprise:
- A step a) of preparation of a shaped catalytic composition, by shaping a mixture of a support composition and of an appropriate active phase to the desired geometry, by tableting and/or moulding said mixture of a support composition and of an appropriate active phase, to obtain either a shaped catalytic composition with an appropriate high-surface area, which consists in the shaped catalytic composition as hereinbefore defined, or a shaped catalytic composition;
- Optionally a step b) of calcination of said shaped catalytic composition obtained from step a), to reach a shaped catalytic composition with an appropriate high-surface area, which consists in the shaped catalytic composition as hereinbefore defined.

In the hereinabove mentioned methods, the support composition generally comprises alumina, ceria or zircon alone or in combination with other oxides either carbides.

In the hereinabove mentioned methods, the composition of the active phase depends on the chemical reaction to be catalyzed in the reactor. Said active phase generally comprises nickel or noble metals such as Rhodium, Platinum or Palladium.

The invention also relates to the use of the shaped catalytic composition as hereinbefore defined, as a catalyst for gas phase chemical reactions, liquid phase chemical reactions or gas liquid phases chemical reactions.

According to this embodiment, units of said shaped catalytic composition are filled as a packed bed in a reaction vessel that has a geometrical shape which induces a self-organizing packing state that is different in the bulk of the packed beds compared to the vicinity of the walls of said vessel. According to this embodiment said reaction vessel is more particularly a cylinder reaction vessel.

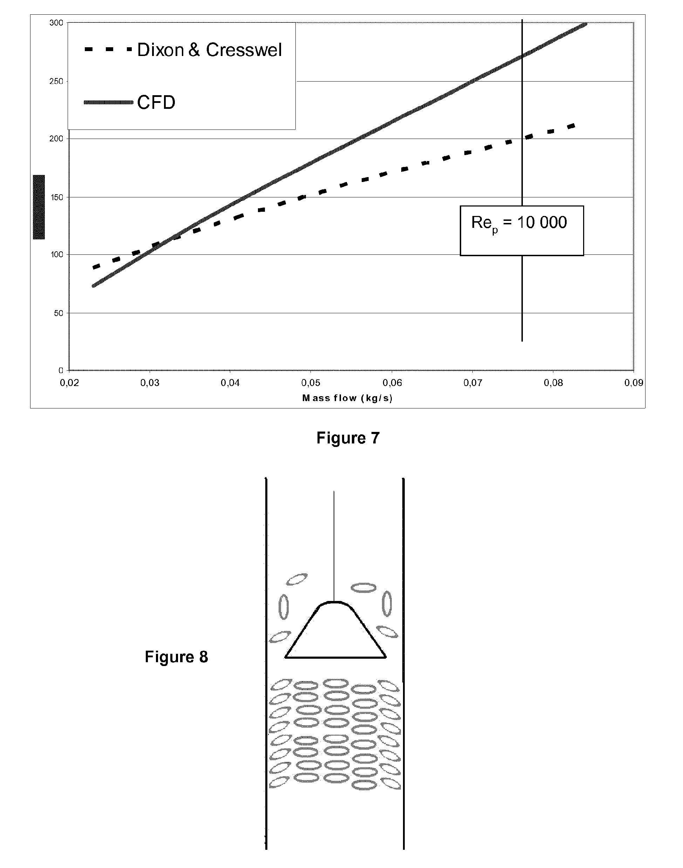

The method of filling of units of said shaped catalytic composition may involve different filling procedures and different filling devices. Indeed it was shown during packing experiments that an optimum reproducible appropriate arrangement is obtained when the particle are packed first along the side walls. A specific filling device can be designed so that it can drive the particles laid from the top towards the walls during the filling process. This device can be an axis-symmetric bell shaped body maintained just above the packed bed during the filling process with a cable and having a diameter so that the gap between the said body and the tube wall is at least equal to the particle height (see Figure 8). The particles may also be dropped along a rotating spiralled ramp or can be dropped from the top of the tube near the side walls and moving along the circumference.

By self-organizing packing state that is different in the bulk of the packed beds compared to the vicinity of the walls of said vessel, it must be understood in the use as hereinbefore defined, that the preferred averaged orientation of the unit particle is statistically different in the bulk and at the walls, said preferred orientation being self-generated during random filling procedure thanks to the specific shape of the catalyst unit particle.

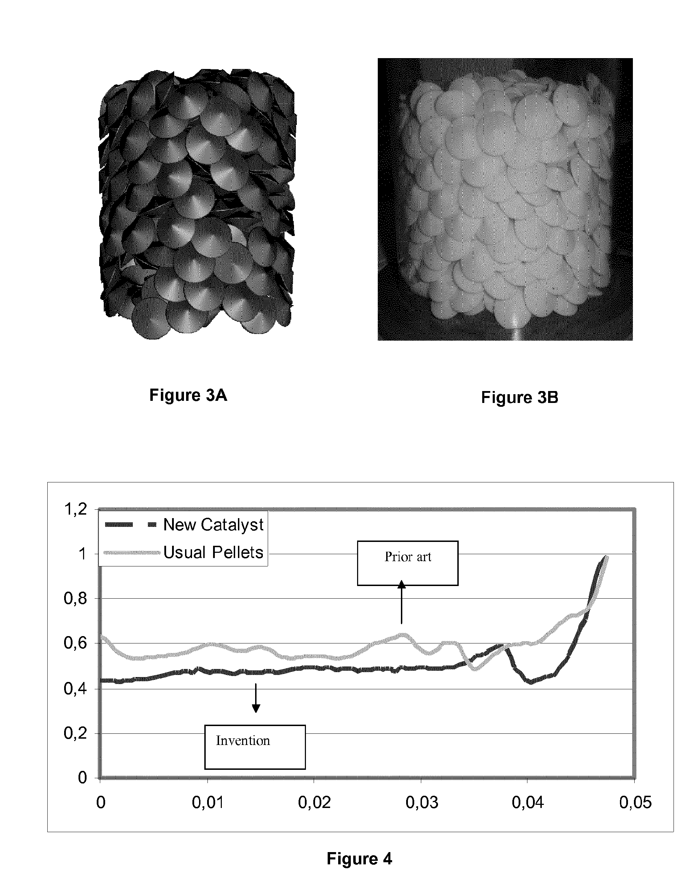

Figures 3A (computer simulation) and 3B (experimental result) illustrates the packing state of the units of said shaped catalytic composition according to the invention near the tubular reactor wall.

When randomly packed in a tubular reactor, the shape of the particle and the diameter to height ratio is optimized in such a way that while the particles are having a preferable axis orientation almost aligned with the tubular axis in the core of the bed, the particles axis is titled with a different orientation near the tube walls.

For example for a biconical shape, the angle formed by the particle axis and the tube axis near the wall, is in the mean equal to the particle 2D_{c} cone angle (arc tan D_{c}/H_{c} ). If D_{c}/H_{c} = 2, this angle is ∼ 63°. Both numerical simulations and experiments have been considered to confirm that in such a case, the average angle formed by the catalyst axis and the tube axis is indeed close to 63°.

As shown in Figure 4, which is a diagrammatic comparison of the porosity variation across a tubular reactor between pellets according the prior art and biconical shaped catalytic composition units according to the invention, this specific orientation helps in maintaining the mean porosity distribution at a lower value near the tube walls. The characteristic distance over which the porosity is increasing to unity at the tube walls is indeed comparatively smaller than for pellets according to the prior art than for the shaped catalytic composition according to the invention. It is assumed that this effect is thus directly related to the size of the particle and the D_{c}/H_{c} ratio.

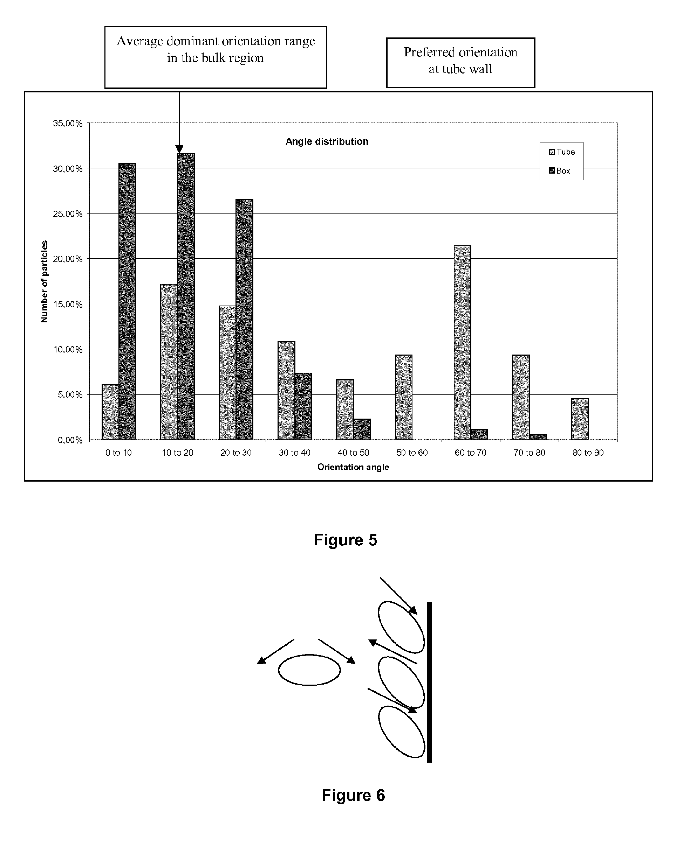

Figure 5 is a diagrammatic computer simulation of the comparison of the statistical orientation angle distribution for biconical shaped catalytic composition units according to the invention in an "infinite box" and in a cylinder reaction vessel. It shows the presence of two peaks of distribution which correspond both to the core and the near wall distribution respectively.

The overall heat transfer in the packed bed defined as the heat transfer from the inner tube wall to the catalyst core is the results of two thermal resistances in series, comprising the near wall heat transfer and the heat transfer across the core packed bed.

Both heat transfers are due to turbulent convection, radiation and conduction. Both in the core and near the tube walls, heat transfer are predominantly due to turbulent convection and dispersion. Near the walls, the socalled "channelling effect" is responsible for the wall heat transfer which can acts either favourably or to the detriment of the transfer. For instance for a random packed bed, the channelling effect is due to the larger porosity which exists near the walls. Within this high porosity region, the flow accelerates locally with a favourable effect on the turbulent heat transfer in the thin boundary layer near the walls. However, if this region is too large, the benefit of the catalyst particles which enhances turbulence and dispersion is lost.

The present invention specifically addresses turbulent dispersion mechanisms near the walls of the packed bed. Compared to prior art, the shape of the catalytic composition according to the invention allows to increase the turbulent convective heat and mass transfer in the core of the packed bed with an increased radial dispersion of the flow imposed both by the aerodynamic shape of the particle and the specific orientation with respect to the mean flow, which optimizes further this mechanism. It also allows to enhance the near wall convective heat transfer with the specific arrangement of the packing. This specific orientation helps in diverging and channelling the flow towards the walls and maintaining high level of turbulent dispersion and flow impingement at the tube walls as shown in the sketch of Figure 6. The high restriction section between the tube walls and the pellets locally accelerates the near wall turbulent flow.

These two mechanisms, the enhanced turbulent dispersion near walls with the flow impingement and the local flow acceleration, are known to enhance the turbulent mixing of transported quantities and in particular to enhance the wall heat transfer. The flow is then transported back towards the core of the bed while contacting the catalyst pellets.

Computational Fluid Dynamic simulations were considered to predict and illustrate the resulting overall global heat transfer and the resulting pressure drop in the packing. The overall heat transfer in a shaped catalytic composition units beds of the invention is compared to usual correlation (Dixon Creswell) with catalyst pellets of the prior art in Figure 7, and for similar conditions (low temperature). At realistic operating conditions (Re > 8000, for a mass flow > 0.07 kg/s), the global wall heat transfer between the inner tube walls and the catalyst bed is increased when compared to the catalyst bed of the prior art correlation by at least 30%, a difference which keep increasing with the Reynolds number. It should be noted that conduction due to the solid matrix is not taken into account by the simulation. It is thus expected that further improvements and optimizations could be obtained from experiments and more realistic numerical simulations (up to 50%).

Thanks to the claimed shape, the shaped catalytic composition, allows to cool down exothermic reactions or to bring heat to endothermic ones, as for example in steam hydrocarbon reforming, which typical reactions are endothermic with a high typical time scale and thus require additional heat input and catalysts. In such reactions, heat must be efficiently transferred to the core of the reactor and reactants must be efficiently driven towards the catalyst surface.

The pressure drop for the shaped catalytic composition was checked to be equivalent to prior art catalyst in this specific example.

The invention is particularly addressing heat and mass transfer in tubular reactor. The objective is to improve near wall and core heat transfer and kinetic reactions activities with the consideration of a specific optimized pellets shape in randomly packed SMR tube reactor. The final objective is to reduce OPEX and /or CAPEX by acting on energy consumption and/or by acting on the typical dimensions of the tube length or number of tubes required. As far as the natural gas steam reforming is concerned, from recent process studies based on the hypothesis of 100% of increase in the heat transfer, the expected operational expenditures (OPEX) saving transposed to the present innovation (assuming a linear scaling) for a steam valorisation equal to 50% can represent up to 200 K€ per year. The expected gain in terms of capital expenditures (CAPEX) with a reduction of the number of tubes about 3% is around 300k€ for a 130, 000 Nm³/h SMR top furnace, assuming an equivalent manufacturing cost of the shaped catalytic composition according to the invention.

It can be expected the same benefits when applying the invention to process relying on reactors with catalyst containing tubes exchanging heat such as typical methanol reactors or ethylene crackers; It is also directly suitable, although not restrictive, to the tubular catalytic reactor producing a mixture of hydrogen (H₂) and carbon monoxide (CO) from methane and vapour in Steam Methane Reformer (SMR).

## Claims

1. A shaped catalytic composition having:
- Either a regular polyhedral form selected from octahedron, dodecahedron icosahedra, said regular polyhedral form having a symmetrical regular polygonal cross section (S) with a diagonal (Dₛ), said regular polyhedral form having a height along the longitudinal revolution axis (Hp), which the ratio (Dₛ)/(Hₚ), is greater than 1 and less or equal to 4 and said diagonal (Dₛ) is greater or equal to 0.5cm and less or equal to 10cm;
- Or a revolution biconical form having a symmetrical circular cross section (C) with a diameter (D_{c}) and a height along the longitudinal revolution axis (H_{c}), which the ratio (D_{c})/(H_{c}) is greater than 1 and less or equal to 4 and said diameter (D_{c}) is greater or equal to 0.5cm and less or equal to 10cm.

2. A shaped catalytic composition according to claim 1, having a central longitudinal cylindrical duct along said longitudinal revolution axis, having a circular cross-section (C') with a diameter (D_{C'}), which the ratio (D_{C'})/(D_{c}) or the ratio (D_{C'})/(Dₛ) is greater or equal to 1/50 and less or equal to 1/5.

3. A shaped catalytic composition according to anyone of Claim 1 or Claim 2, which the ratio (Dₛ)/(Hₚ) or the ratio (D_{c})/(H_{c}) is greater than 1 and less or equal to 3.

4. A shaped catalytic composition according to Claim 3 which the ratio (Dₛ)/(Hₚ) or the ratio (D_{c})/(H_{c}) is equal to 2.

5. A shaped catalytic composition according to anyone of claims 1 to 4, having either a revolution octahedral form or a biconical form.

6. A shaped catalytic composition according to anyone of claims 1 to 5, which said diagonal (Dₛ) or said diameter (D_{c}) is greater or equal to 0.5cm and less or equal to 5cm.

7. Use of the shaped catalytic composition as defined in anyone of claims 1 to 6, as a catalyst for gas phase chemical reactions, liquid phase chemical reactions or gas liquid phases chemical reactions.

8. Use according to Claim 7, wherein units of said shaped catalytic composition are filled as a packed bed in a cylinder reaction vessel.
